# EUROPÄISCHE PATENTSCHRIFT

(11) **EP 3 059 551 B1**
(45) Veröffentlichungstag und Bekanntmachung des Hinweises auf die Patenterteilung: **27.10.2021**
(21) Anmeldenummer: 15167338.1
(22) Anmeldetag: 12.05.2015
(51) Int. Cl.: G01C 21/34

(54) **VERFAHREN UND VORRICHTUNG ZUR PLANUNG EINER FAHRTROUTE FÜR EIN FAHRZEUG**
METHOD AND DEVICE FOR PLANNING A ROUTE FOR A VEHICLE
PROCÉDÉ ET DISPOSITIF DE PLANIFICATION D'UN ITINÉRAIRE POUR UN VÉHICULE

(30) Priorität: 20.02.2015 DE 102015203059
(43) Veröffentlichungstag der Anmeldung: 24.08.2016
(60) Teilanmeldung: 21187766.7
(73) Patentinhaber: Volkswagen Aktiengesellschaft, 38440 Wolfsburg (DE)
(72) Erfinder: Parada, Myriam, 10245 Berlin (DE)
(74) Vertreter: Reitstötter Kinzebach

(56) Entgegenhaltungen:
- EP-A1- 2 469 231
- DE-A1-102008 041 948
- DE-B3-102004 056 686
- US-B1- 7 534 206

## Beschreibung

Die vorliegende Erfindung betrifft ein Verfahren und eine Vorrichtung zur Ermittlung einer Fahrtroute für ein Fahrzeug.

Bei einem Navigationssystem wird die aktuelle geographische Position zum Beispiel mittels Signalen bestimmt, die von Satelliten empfangen werden. Der Nutzer kann als Ziel eine geographische Position eingeben. Das Navigationssystem berechnet dann zum Beispiel in Abhängigkeit von einem Straßennetz der geographischen Karte eine Route von der aktuellen Position zu der Ziel-Position. Die berechnete Route besteht bei bekannten Navigationssystemen aus einer großen Zahl einzelner Manöver und Routenabschnitten.

Es ist dabei insbesondere bekannt, eine Route anhand von Prioritäten, die ein Nutzer auswählen kann, zu berechnen. Solche Prioritäten sind beispielsweise die schnellste oder die kürzeste Route. Zudem kann der Benutzer auch Routen wählen, auf welchen das Fahrzeug am wenigsten Energie verbraucht. Weiterhin ist auch die Berechnung von Panoramarouten, auf welchen landschaftlich reizvolle Streckenabschnitte liegen, bekannt.

Die DE 10 2013 212 776 A1 beschreibt ein Routenplanungsverfahren, bei welchem die Fahrtroute zwischen einer Startposition und einer gewünschten Zielposition eines Fahrzeugs mittels einer Auswahl einzelner Kandidaten-Streckenabschnitte aus einer Vielzahl von Kandidaten-Streckenabschnitten unter Berücksichtigung mindestens eines Kostenparameters, der den jeweiligen Kandidaten-Streckenabschnitten zugeordnet ist, ermittelt wird. Ein Kostenparameter des mindestens einen berücksichtigten Kostenparameters ist hierbei ein Autonomiekostenparameter, der repräsentativ dafür ist, wie autonom der jeweilige Kandidaten-Streckenabschnitt von dem Fahrzeug befahren werden kann. Das autonome Fahren des Fahrzeugs bedeutet in diesem Zusammenhang, dass das Fahrzeug frei von menschlicher Unterstützung, insbesondere frei von menschlicher Unterstützung eines Fahrzeugführers, navigiert wird.

Die EP 2 469 231 A1 beschreibt ein Verfahren, bei dem biometrische Daten über das Verhalten eines Nutzers ausgewertet und eine Route zu einer Zielposition unter Berücksichtigung dieser Daten bestimmt wird. Zum Beispiel können die Herzschlagfrequenz und Informationen über Augenbewegungen berücksichtigt werden. Bei der Routenberechnung gehen diese Informationen als Kostenparameter zur Bewertung der Route ein.

Die DE 10 2004 056 686 B3 beschreibt ein Verfahren zur automatisierten individuellen Navigation eines Kraftfahrzeugs. Bei dem Verfahren werden individuelle Merkmale eines Fahrers, wie beispielsweise sein aktueller Belastungszustand, bei der Bestimmung einer Fahrtroute berücksichtigt.

Die DE 10 2008 041 948 A1 beschreibt eine Navigationsvorrichtung, welche in Fahrzeugen eingesetzt wird, welche jedoch auch für die Navigation zu Fuß oder auf dem Fahrrad eingesetzt werden kann. Für diesen Einsatz soll die Navigationsvorrichtung eine in sportlicher Hinsicht optimierte Funktionalität zur Verfügung stellen. Die in diesem Fall von der Navigationsvorrichtung berechnete Route kann Biometriedaten und die Fitness des Benutzers berücksichtigen. Es können Schwellenwerte für die Biometriedaten eingegeben werden und die Route kann so ausgewählt werden, dass der Benutzer bis an die Grenze einer jeweils vorgewählten Belastung geführt werden kann, er aber dennoch nicht durch eine allzu anstrengende ausgewählte Route überlastet wird.

Die US 7 534 206 B1 beschreibt schließlich ein Fitnessgerät, welches die Navigation unterstützt.

Es ist die Aufgabe der vorliegenden Erfindung ein Verfahren und eine Vorrichtung bereitzustellen, welche es ermöglichen, in einem Fahrzeug eine Fahrtroute individuell für einen momentanen Fahrer zu ermitteln.

Erfindungsgemäß wird diese Aufgabe durch ein Verfahren mit den Merkmalen des Anspruchs 1 und eine Vorrichtung mit den Merkmalen des Anspruchs 6 gelöst.

Bei dem erfindungsgemäßen Verfahren werden eine Start-Position und eine Ziel-Position für das Fahrzeug ermittelt. Es wird zumindest ein Fahrerzustandsparameter für einen Fahrer erfasst. Aus dem Fahrerzustandsparameter wird ein Wert für einen Zustand des Fahrers ermittelt. Weiterhin wird zumindest eine Fahrtroute von der Start-Position zu der Ziel-Position in Abhängigkeit von dem Wert für den Zustand des Fahrers ermittelt. Zudem wird die ermittelte Fahrtroute angezeigt.

Unter dem Fahrerzustandsparameter wird im Sinne der Erfindung ein Parameter verstanden, der sich auf den körperlichen, emotionalen und/oder geistigen Zustand des Fahrers bezieht. Insbesondere umfasst der Fahrerzustandsparameter einen Vitalparameter des Fahrers. Der Fahrerzustandsparameter kann dabei den Aufmerksamkeitsgrad, die Aktivität, die Herzschlagrate, den Blutdruck, die Sauerstoffsättigung, die Atemfrequenz und/oder die Lidschlagfrequenz des Fahrers umfassen. Zudem kann auch eine Ruhezeit des Fahrers als Fahrerzustandsparameter berücksichtigt werden. Mittels einem oder mehrerer dieser Parameter kann dann der Zustand des Fahrers einer momentanen Verfassung zugeordnet werden. Die Verfassung des Fahrers kann beispielsweise in die Kategorien erregt, müde oder normal eingeteilt werden. Dadurch ermöglicht das erfindungsgemäße Verfahren vorteilhafterweise, dass eine Fahrtroute nicht nur auf herkömmliche Weise berechnet werden kann, sondern zusätzlich unter Berücksichtigung der momentanen Verfassung des Fahrers ermittelt wird. Die Fahrtroute wird daher individuell für den Fahrer, der momentan das Fahrzeug führt, bestimmt.

Das erfindungsgemäße Verfahren ermöglicht es vorteilhafterweise, dass bei der Ermittlung der Fahrtroute die individuelle Verfassung des Fahrers zum Zeitpunkt der Fahrtroutenermittlung miteinbezogen wird. Der Fahrer kann dabei selbst auswählen, ob die Fahrerzustandsparameter in die Ermittlung der Fahrtroute miteinfließen sollen oder nicht. Es wird zunächst die Verfassung des Fahrers bestimmt. Ist der Fahrer zum Zeitpunkt der Fahrtroutenermittlung beispielsweise verärgert oder müde, können der ermittelte Wert für den Blutdruck, für die Herzschlagrate und für die anderen Fahrerzustandsparameter von den üblicherweise für den Fahrer gemessenen Werten abweichen. Wird mittels des Wertes des Fahrerzustandsparameter ermittelt, dass der Fahrer verärgert ist, kann eine Fahrtroute ermittelt werden, die den Fahrer zumindest nicht weiter verärgert. Beispielsweise kann eine Fahrtroute ermittelt werden, auf welcher momentan wenig Verkehr herrscht und welche wenig Verkehrszeichen, wie beispielsweise Ampeln, aufweist. Wird hingegen ermittelt, dass der Fahrer müde ist, wird eine Fahrtroute ermittelt, die den Fahrer zumindest nicht weiter ermüdet oder aufgrund seiner Müdigkeit in Gefahr bringt. Die Fahrtroute berücksichtigt beispielsweise Streckenabschnitte mit Geschwindigkeitsbegrenzungen und/oder wenig Verkehr.

Weiterhin wird erfindungsgemäß der Wert für den Zustand des Fahrers mit einem Soll-Wert des Fahrerzustandsparameters verglichen, wobei der Soll-Wert innerhalb eines definierten Soll-Wertebereichs liegt. Wenn der Wert innerhalb des Soll-Wertebereichs liegt, wird der Wert einer ersten Kategorie zugeordnet. Wenn der Wert jedoch außerhalb des Soll-Wertebereichs liegt, wird der Wert einer zweiten Kategorie zugeordnet. Der definierte Soll-Wertebereich ist dabei insbesondere als Wertebereich definiert, in dem der Fahrerzustandsparameter als normal gilt. Dies ermöglicht vorteilhafterweise, dass der Wert mit einem realistischen Wert für den Fahrerzustandsparameter verglichen wird und somit der Zustand des Fahrers realitätsnah eingeschätzt werden kann.

Weiterhin wird der Soll-Wertebereich des Fahrerzustandsparameters erfindungsgemäß aus einer Historie von Werten für den Zustand des Fahrers, die für den Fahrer in der Vergangenheit ermittelt wurden, ermittelt. Der Fahrerzustandsparameter ist in der Regel ein Parameter, dessen Normalbereich von Person zu Person unterschiedlich ist. Beispielsweise können körperlich trainierte Personen eine im Allgemeinen niedrigere Herzschlagrate aufweisen als körperlich untrainierte Personen. Auch die Werte für den Blutdruck, die Aktivität, den Aufmerksamkeitsgrad, die Sauerstoffsättigung, die Atemfrequenz und/oder die Lidschlagfrequenz im Normalzustand können sich ebenfalls von Person zu Person unterscheiden. Im Allgemeinen ist der Normalbereich für den Wert des erfassten Fahrerzustandsparameters individuell und für jede Person unterschiedlich. Es ist daher vorteilhaft, den Wert des Fahrerzustandsparameters mit einem Wert, der aus einer Historie von Werten des Fahrerzustandsparameters, die in der Vergangenheit bereits für den Fahrer ermittelt wurden, zu vergleichen. Denn dadurch kann der Zustand des Fahrers personifiziert und individuell eingeschätzt werden. Weiterhin können bei einem solchen Normalbereich insbesondere weitere fahrerspezifische Parameter wie Gewicht, Alter, Größe und/oder Geschlecht miteinbezogen werden. Diese Angaben können beispielsweise vor Fahrtantritt eingegeben werden oder in einem fahrerspezifischen Profil im Fahrzeug als Basisdaten hinterlegt sein.

Zudem wird erfindungsgemäß, wenn der Wert für den Zustand des Fahrers der ersten Kategorie zugeordnet wird, zumindest eine Fahrtroute ermittelt, die einen Schwierigkeitsgrad einer ersten Stufe aufweist, und, wenn der Wert für den Zustand des Fahrers der zweiten Kategorie zugeordnet wird, zumindest eine Fahrtroute ermittelt, die einen Schwierigkeitsgrad einer zweiten Stufe aufweist. Dabei ist der Schwierigkeitsgrad der Fahrtroute der ersten Stufe insbesondere höher als der Schwierigkeitsgrad der Fahrtroute der zweiten Stufe. Dies ermöglicht es vorteilhafterweise, dass für einen Fahrer, der momentan erregt oder müde ist, eine Fahrtroute mit einem niedrigen Schwierigkeitsgrad berechnet wird, während für einen Fahrer, der sich in guter Verfassung befindet, eine Fahrtroute mit hohem Schwierigkeitsgrad ermittelt wird.

Bei dem erfindungsgemäßen Verfahren kann es sich insbesondere um ein Verfahren handeln, dass dann ausgeführt wird, wenn der Fahrer als Priorität angegeben hat, dass er Panoramarouten fahren möchte. Panoramarouten führen in der Regel von Autobahnen und geraden Fahrstrecken weg. Sie können einen kurvigen Verlauf, insbesondere eine Vielzahl von Serpentinen und/oder 180° -Kurven, aufweisen. Zudem können solche Strecken auch steile Streckenabschnitte und im Allgemeinen Höhenprofile aufweisen, die mehrere 100 bis 1000 Meter umfassen. Solche Strecken weisen daher einen höheren Schwierigkeitsgrad auf als Autobahnstrecken.

In einer weiteren Ausgestaltung wird der Wert für den Zustand des Fahrers aus zumindest zwei einzelnen Fahrerzustandsparametern ermittelt. Es wird dann ein kombinierter Wert aus den Werten der einzelnen Fahrerzustandsparameter ermittelt. Bei der Ermittlung der Fahrtroute können dadurch vorteilhafterweise mehrere Fahrerzustandsparameter berücksichtigt werden. Durch die Berechnung eines Werts aus den erfassten Werten mehrerer Fahrerzustandsparameter kann vorteilhafterweise eine genauere Einschätzung des Zustands des Fahrers vorgenommen werden. Die Gefahr, dass aufgrund eines zufällig außerhalb des Normalbereichs liegenden Werts eines einzigen Fahrerzustandsparameters der Zustand des Fahrers falsch eingeschätzt wird, kann dadurch minimiert werden. Zudem können bei der Ermittlung des Werts die Werte der mehreren Fahrerzustandsparameter unterschiedlich gewichtet werden. Beispielsweise kann die Sauerstoffsättigung, die in der Regel einen sehr stabilen Wert aufweist, weniger gewichtet werden als alle anderen Fahrerzustandsparameter. Die Berechnung des Fahrerzustandsparameters ist dadurch besonders realitätsnah und fahrerbezogen gestaltet.

Weiterhin wird während der Ermittlung eines Werts für einen Fahrerzustandsparameter ein graphisches Objekt auf der Anzeigefläche erzeugt, welches einen zeitlichen Verlauf des Fahrerzustandsparameters über einen bestimmten Erfassungszeitraum darstellt. Der Erfassungszeitraum kann dabei in einem Bereich von mehreren Stunden bis mehreren Jahren liegen. Das graphische Objekt kann die Historienwerte des Fahrzeugparameters für den Fahrer wiedergeben. Der Erfassungszeitraum kann jedoch auch einen Zeitraum von 24 Stunden umfassen, so dass das graphische Objekt dann den Verlauf des Fahrerzustandsparameters innerhalb der letzten 24 Stunden wiedergibt.

Insbesondere wird das graphische Element während der Ermittlung des Fahrerzustandsparameters in einer Animation ständig verändert. Ein Intensitätsmaximum wird entlang des Verlaufs des graphischen Objekts bewegt. Dadurch wird dem Betrachter eine visuelle Darstellung des Ermittlungsvorgangs dargestellt. Zudem kann der Fahrer dadurch besser erkennen, wie sich der Fahrerzustandsparameter innerhalb des Erfassungszeitraums verändert hat.

Des Weiteren kann für jeden Fahrerzustandsparameter, der in die Ermittlung des kombinierten Werts mit eingeht, ein neues graphisches Objekt erzeugt werden. Dadurch wird dem Fahrer vorteilhafterweise der Wert jedes einzelnen Fahrerzustandsparameters zumindest kurz auf der Anzeigefläche dargestellt. Denn werden dem Fahrer seine Werte für die Fahrerzustandsparameter dargestellt, erhöht dies die Wahrscheinlichkeit, dass der Fahrer die ermittelte Fahrtroute als für ihn geeignet akzeptiert.

In einer weiteren Ausgestaltung werden Informationen zu auf der ermittelten Fahrtroute vorherrschenden Bedingungen ermittelt. Die Fahrtroute wird zumindest teilweise angezeigt. Zudem werden die Informationen graphisch in der Anzeige der Fahrtroute dargestellt. Durch diese Ausgestaltung werden vorteilhafterweise die auf der Fahrtroute vorherrschenden Bedingungen auf einer Anzeigefläche dem Fahrer an der Stelle der Fahrtroute, für welche sie ermittelt worden sind, angezeigt. Dies hat einen Warneffekt für den Fahrer. Dadurch kann der Fahrer zudem besser entscheiden, ob er die Fahrtroute tatsächlich auswählen möchte.

Unter den auf der Fahrtroute vorherrschenden Bedingungen werden erfindungsgemäß insbesondere Wetterbedingungen oder Straßenbedingungen auf Streckenabschnitten der Fahrtroute verstanden. Die Straßenbedingungen können insbesondere Steigungen, Kurven oder ähnliche für eine Strecke relevante Besonderheiten umfassen. Die Straßenbedingungen können allerdings auch von den Wetterbedingungen abhängen. Beispielsweise können auf der Fahrtroute glatte Straßenbedingungen, beispielsweise verursacht durch Eis, Schnee oder Regen, vorherrschen. Zudem kann auch auf Felssturz, Steinschlag oder Erdrutsch hingewiesen werden.

Ferner kann ermittelt werden, ob das Fahrzeug dazu ausgestattet ist, die ermittelte Fahrtroute zu befahren. In Abhängigkeit von dieser Ermittlung wird ein Hinweis angezeigt. Dabei kann insbesondere ermittelt werden, ob das Fahrzeug dazu ausgestattet ist, die Fahrtroute unter den vorherrschenden Straßenbedingungen zu befahren. Beispielsweise sollte ein Fahrzeug, auf welchem Sommerreifen aufgebracht sind, Fahrtrouten, auf welchen winterliche Bedingungen vorherrschen, nicht befahren. Dies kann als Hinweis auf der Anzeigefläche ausgegeben werden. Auch der Reifendruck kann ungeeignet zum Befahren der ermittelten Fahrtroute sein. Der Fahrer kann auch darauf hingewiesen werden, wenn der Energievorrat des Fahrzeugs zum Befahren der Fahrtroute nicht ausreicht. Es kann dann vorteilhafterweise vor Fahrtantritt entschieden werden, ob die Reifen noch gewechselt werden müssen, Luft in die Reifen nachgefüllt oder aus den Reifen ausgelassen werden muss oder ob der Energievorrat noch nachgefüllt werden muss. Weiterhin können auch Hinweise und/oder Informationen zu Fahrerassistenzsystemen oder den Bremsen des Fahrzeugs angezeigt werden.

Im Allgemeinen kann das erfindungsgemäße Verfahren drei unterschiedliche Überprüfungsschritte umfassen. Der erste Überprüfungsschritt umfasst dabei die Überprüfung des Fahrers selbst. Der zweite Überprüfungsschritt umfasst die Überprüfung der ermittelten Fahrtrouten auf besondere Straßenbedingungen. Der dritte Überprüfungsschritt ist optional und umfasst die Überprüfung des Fahrzeugs, ob dieses dazu ausgestattet ist, die ermittelte Fahrtroute unter den ermittelten Straßenbedingungen zu befahren.

Ferner betrifft die Erfindung eine Vorrichtung zur Ermittlung einer Fahrtroute für ein Fahrzeug. Die Vorrichtung umfasst zumindest eine Erfassungseinheit, mittels welcher ein Fahrerzustandsparameter für einen Fahrer erfassbar ist. Zudem umfasst die Vorrichtung eine Ermittlungseinheit, mittels welcher eine Start-Position und eine Ziel-Position für das Fahrzeug ermittelbar sind, und mittels welcher aus dem Fahrerzustandsparameter ein Wert für einen Zustand des Fahrers ermittelbar ist. Weiterhin weist die Vorrichtung eine Anzeigevorrichtung und eine Steuervorrichtung auf. Mittels der Steuervorrichtung ist die Ermittlungseinheit derart ansteuerbar, dass in Abhängigkeit von dem Wert für den Zustand des Fahrers eine Fahrtroute von der Start-Position zu der Ziel-Position ermittelbar ist und mittels welcher die Anzeigevorrichtung derart ansteuerbar ist, dass die ermittelte Fahrtroute anzeigbar ist. Erfindungsgemäß ist die Steuervorrichtung dazu eingerichtet, den Wert für den Zustand des Fahrers mit einem Soll-Wertebereich für den Zustand des Fahrers zu vergleichen, wenn der Wert für den Zustand des Fahrers innerhalb des Soll-Wertebereichs liegt, den Wert für den Zustand des Fahrers einer ersten Kategorie zuzuordnen, und, wenn der Wert für den Zustand des Fahrers außerhalb des Soll-Wertebereichs liegt, den Wert für den Zustand des Fahrers einer zweiten Kategorie zuzuordnen, wobei der Soll-Wertebereich für den Zustand des Fahrers aus einer Historie von Werten für den Zustand des Fahrers, die für den Fahrer in der Vergangenheit ermittelt wurden, ermittelt wird, wobei, wenn der Wert für den Zustand des Fahrers der ersten Kategorie zugeordnet wird, zumindest eine Fahrtroute ermittelt wird, die einen Schwierigkeitsgrad einer ersten Stufe aufweist, und, wenn der Wert für den Zustand des Fahrers der zweiten Kategorie zugeordnet wird, zumindest eine Fahrtroute ermittelt wird, die einen Schwierigkeitsgrad einer zweiten Stufe aufweist, wobei der Schwierigkeitsgrad der Fahrtroute der ersten Stufe höher ist als der Schwierigkeitsgrad der Fahrtroute der zweiten Stufe, wobei eine Fahrtroute mit erhöhtem Schwierigkeitsgrad eine besonders hohe Aufmerksamkeit erfordert.

Die Vorrichtung ist insbesondere dazu geeignet, das erfindungsgemäße Verfahren auszuführen und weist daher alle Vorteile des erfindungsgemäßen Verfahrens auf.

Die Erfassungseinheit kann im Fahrzeug selbst angeordnet sein, so dass die Fahrerzustandsparameter vom Fahrzeug direkt erfassbar sind. Dadurch können dann die Fahrerzustandsparameter direkt bei Fahrtantritt erfasst werden.

Die Fahrerzustandsparameter können alternativ auch über einen Erfassungszeitraum erfasst werden. Insbesondere können die Fahrerzustandsparameter außerhalb des Fahrzeugs erfasst werden. Die Erfassungseinheit ist dann beispielsweise das Mobiltelefon des Fahrers, welches die Anzahl der Schritte, die der Fahrer über den Erfassungszeitraum verteilt gelaufen ist, erfasst. Dazu kann das Mobiltelefon eine Applikation aufweisen, welche dazu ausgestaltet ist, die Schritte des Fahrers zu zählen. Daraus kann dann eine Aktivität abgeleitet werden. Alternativ kann der Fahrer auch den ganzen Tag ein sogenanntes Fitness-Armband tragen, welches Vitalparameter des Fahrers über den Tag verteilt erfassen kann. Ein solches Band kann beispielsweise die Herzschlagrate, die Anzahl der Schritte oder den Blutdruck in regelmäßigen Abständen erfassen.

Weiterhin kann die Vorrichtung eine Kommunikationsvorrichtung umfassen, die mit einer Erfassungseinheit, die vom Fahrer auch außerhalb des Fahrzeugs getragen wird, kommuniziert. Die erfassten Werte des Fahrerzustandsparameters können so an die Vorrichtung übertragen werden.

Zudem kann die Kommunikationseinrichtung mit einer außerhalb des Fahrzeugs angeordneten Informationseinrichtung kommunizieren. Dadurch kann die Vorrichtung dann Informationen für die Fahrtroute selbst einholen und diese Informationen in die Ermittlung der Fahrtroute mit einbeziehen. Die Informationen betreffen dabei insbesondere die Informationen zu den auf der Fahrtroute vorherrschenden Bedingungen.

Die Erfindung wird nun anhand von Ausführungsbeispielen mit Bezug zu den Zeichnungen näher erläutert.
- Figur 1: zeigt ein Ausführungsbeispiel einer erfindungsgemäßen Vorrichtung,
- Figur 2: zeigt eine Anordnung der erfindungsgemäßen Vorrichtung in einem Fahrzeug,
- Figuren 3 bis 11: zeigen Anzeigen, wie sie von einem ersten Ausführungsbeispiel des erfindungsgemäßen Verfahrens auf der Anzeigefläche der Vorrichtung erzeugbar sind,
- Figuren 12 bis 14: zeigen Anzeigen, wie sie von einem zweiten Ausführungsbeispiel des erfindungsgemäßen Verfahrens auf der Anzeigefläche der Vorrichtung erzeugbar sind, und
- Figur 15: zeigt eine Anzeige, wie sie während des Befahrens einer ausgewählten Fahrtroute auf der Anzeigefläche erzeugbar ist.

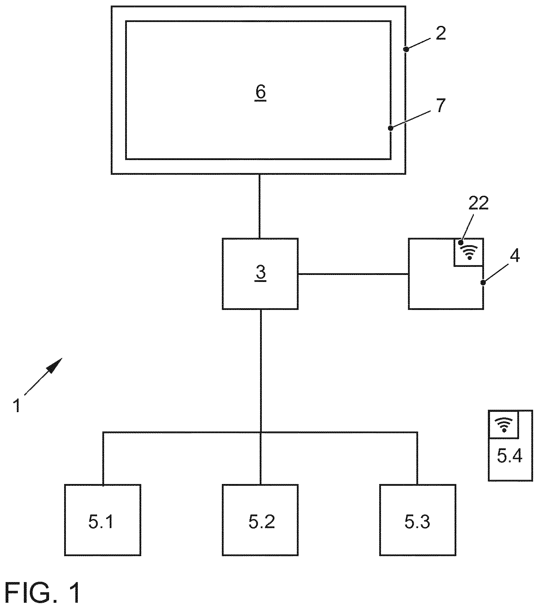

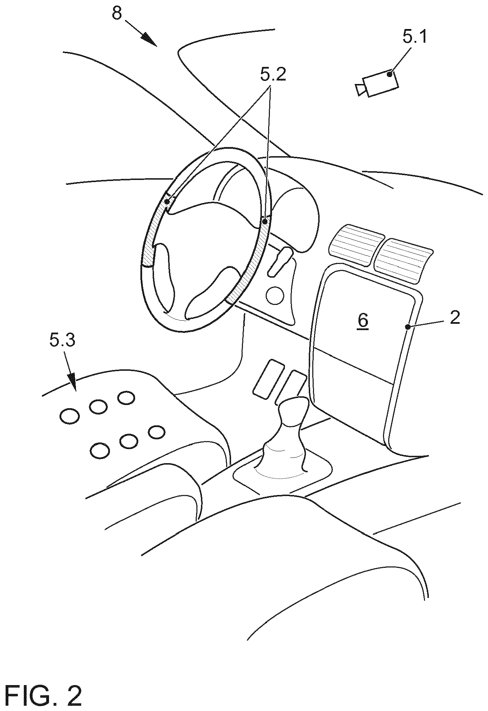

Mit Bezug zu den Figuren 1 und 2 wird ein Ausführungsbeispiel der erfindungsgemäßen Vorrichtung 1 sowie eine Anordnung der Vorrichtung 1 in einem Fahrzeug 8 erläutert.

Die Vorrichtung 1 umfasst eine Anzeigevorrichtung 2. Die Anzeigevorrichtung 2 wiederum umfasst eine Anzeigefläche 6. Die Anzeigefläche 6 kann von einem Display, insbesondere einem Flüssigkristalldisplay, beliebiger Bauart bereitgestellt werden.

Auf der Anzeigefläche 6 ist eine berührungsempfindliche Oberfläche 7 vorgesehen, über welche der Nutzer Eingaben tätigen kann. Es wird somit ein sogenannter Touchscreen bereitgestellt.

Die Anzeigevorrichtung 2 ist mit einer Steuervorrichtung 3 gekoppelt. Mittels der Steuervorrichtung 3 können die Berührungen auf der berührungsempfindlichen Oberfläche 7 ortsaufgelöst erfasst und in Abhängigkeit von der Anzeige auf der Anzeigefläche 6 in Steuersignale umgesetzt werden. Ferner können von der Steuervorrichtung 3 Graphikdaten erzeugt werden, die mittels der Anzeigevorrichtung 2 angezeigt werden können.

Die Steuervorrichtung 3 erhält weiterhin Daten von mehreren Erfassungseinheiten 5.1 bis 5.4. Die Erfassungseinheiten 5.1 bis 5.4 sind dabei dazu ausgebildet, Daten von Fahrerzustandsparametern zu erfassen.

Die Fahrerzustandsparameter umfassen dabei Vitalparameter des Fahrers, wie den Aufmerksamkeitsgrad, die Aktivität, die Ruhezeit, die Herzschlagfrequenz, den Herzrhythmus, den Blutdruck, die Sauerstoffsättigung, die Atemfrequenz und/oder die Lidschlagfrequenz des Fahrers.

Die Erfassungseinheit 5.1 ist als Kamera ausgebildet, die zu jeder Zeit auf den Fahrer ausgerichtet ist. Mittels der Kamera 5.1 wird der Aufmerksamkeitsgrad, die Aktivität, die Lidschlagfrequenz, die Atemfrequenz und die Sauerstoffsättigung des Fahrers erfasst.

Der Aufmerksamkeitsgrad und die Aktivität des Fahrers können ermittelt werden, indem Kopfund/oder Augenbewegungen des Fahrers erfasst werden. Die Kopf- und/oder Augenbewegungen werden gezählt und dann einem Wert zugeordnet. Da der Fahrer einem für die Aktivität ermittelten Wert jedoch wenig Bedeutung zukommen lassen kann, wird der Wert wiederum in eine Kategorie hoch, mittel oder niedrig eingeteilt, die dann dem Fahrer ausgegeben wird.

Der Wert der Lidschlagfrequenz kann durch Zählen des Lidschlags ermittelt werden. Dabei wird von der Kamera ein Bild des Gesichts des Fahrers aufgenommen und der Lidschlag gezählt. Der Lidschlag wird pro Minute gezählt.

Auch der Wert der Atemfrequenz kann direkt durch Zählen der Bewegungen des Brustkorbs des Fahrers ermittelt werden. Auch hier werden die Atembewegungen pro Minute gezählt.

Die Sauerstoffsättigung kann ebenfalls über die Kamera 5.1 erfasst und ein Wert dafür ermittelt werden.

Weiterhin wird auch der Blutdruck des Fahrers mittels der Kamera 5.1 ermittelt. Der Blutdruck wird dabei über eine Pulswellenlaufzeit sowie über das sogenannte RR-Intervall ermittelt.

Die Methode zur Bestimmung von Vitalparametern über Pulswellenlaufzeit und RR-Intervall ist in der DE 10 2013 001 553 A1 beschrieben, die durch Bezugnahme in die vorliegende Anmeldung aufgenommen wird.

Zur Ermittlung der Herzschlagrate des Fahrers ist in das Lenkrad des Fahrzeugs 8 die Erfassungseinheit 5.2, die als Pulsmessgerät ausgebildet ist, eingebaut. Das Pulsmessgerät 5.2 im Lenkrad erfasst dabei den Puls in der Handinnenfläche des Fahrers und ermittelt einen zugehörigen Wert für die Herzschlagrate.

Der Herzrhythmus des Fahrers wird mittels der Erfassungseinheit 5.3, welche in dem Fahrersitz des Fahrzeugs 8 verbaute Elektroden umfasst, erfasst. Eine solche Erfassungseinheit 5.3 ist in der DE 10 2010 023 369 A1 beschrieben, die durch Bezugnahme in die vorliegende Anmeldung aufgenommen wird. Dadurch kann berührungslos der Herzrhythmus des Fahrers erfasst und diesem ein Wert zugeordnet werden. Der Wert wird dann in unregelmäßig oder regelmäßig kategorisiert.

Die Erfassungseinheit 5.4 ist als Fitness-Armband ausgestaltet. Dieses sammelt über einen bestimmten Erfassungszeitraum, der beispielsweise 24 Stunden beträgt, Informationen zu den Fahrerzustandsparametern Aktivität, Herzschlagrate und Ruhezeit. Das Fitness-Armband weist zudem eine Schnittstelle auf, mittels welcher es mit der in der Vorrichtung 1 angeordneten Kommunikationseinrichtung 22 kommunizieren kann. Die Aktivität 5.4 wird dabei darüber ermittelt, dass die Anzahl der Schritte, welche der Fahrer in dem Erfassungszeitraum zurücklegt, gezählt werden. Im Unterschied zu der Aktivität, die mittels der Kamera 5.1 ermittelt wird, handelt es sich also um die allgemeine Aktivität des Fahrers. Ist der Fahrer innerhalb des Erfassungszeitraums beispielsweise viel aktiver als normal, kann dies ein Indiz dafür sein, dass der Fahrer bei Fahrtantritt dann müde ist.

Weiterhin ist die Steuervorrichtung 3 mit einer Ermittlungseinheit 4 verbunden. Mittels der Ermittlungseinheit 4 wird die momentane Position des Fahrzeugs 8 ermittelt. Dies geschieht über ein GPS-System. Die momentane Position des Fahrzeugs 8 ist dabei die Startposition des Fahrzeugs 8. Zudem wird eine Ziel-Position ermittelt. Diese wird vom Fahrer beispielsweise in ein Navigationssystem, welches die Ermittlungseinheit 4 umfasst, eingegeben. Weiterhin werden mittels der Ermittlungseinheit 4 die Daten der Erfassungseinheiten 5.1 bis 5.4 ausgewertet. Dadurch ist dann ein Wert für den Zustand des Fahrers ermittelbar.

Die Steuervorrichtung 3 überträgt die von den Erfassungseinheiten 5.1 bis 5.4 erfassten Fahrerzustandsparameter an die Ermittlungseinheit 4. Bei der Routenberechnung von der StartPosition zur Ziel-Position für das Fahrzeug 8 werden dann die Fahrerzustandsparameter berücksichtigt.

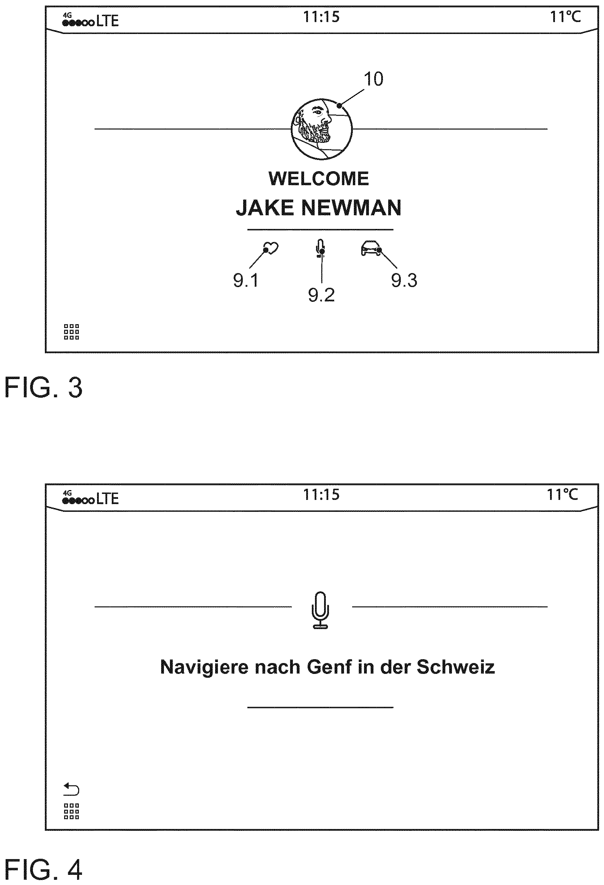

Mit Bezug zu den Figuren 3 bis 11 wird ein erstes Ausführungsbeispiel des erfindungsgemäßen Verfahrens erläutert.

In einem ersten Schritt meldet sich der Fahrer unter seinem Namen im Navigationssystem 4 des Fahrzeugs 8 an. Dabei erscheint die in Figur 3 gezeigte Anzeige auf der Anzeigefläche 6. Diese wird im Folgenden als Startbildschirm bezeichnet.

Auf dem Startbildschirm werden der Name des Fahrers, im vorliegenden Beispiel "Jake Newman", und, soweit hinterlegt, ein Foto des Fahrers im graphischen Feld 10, angezeigt.

Weiterhin werden mehrere graphische Objekte 9.1 bis 9.3, welche als Schaltflächen ausgebildet sind, auf dem Startbildschirm angezeigt. Berührt der Fahrer eine dieser Schaltflächen 9.1 bis 9.3, wird entweder eine entsprechende Funktion des Fahrzeugs 8 eingeschaltet oder es wird ein Menü geöffnet, mittels welchem Einstellungen für eine dem graphischen Objekt 9.1 bis 9.3 zugeordnete Funktion getroffen werden können.

Im vorliegenden Beispiel möchte der Fahrer von seinem momentanen Standort nach Genf in die Schweiz fahren. Dazu berührt der Fahrer das graphische Objekt 9.2 auf der Anzeigefläche 6 und aktiviert damit die Sprachsteuerung des Fahrzeugs 8. Der momentane Standort des Fahrzeugs 8 wird dabei als Startposition mittels GPS-Signal von dem Navigationssystem 4 ermittelt. Alternativ kann der Fahrer zur Aktivierung der Spracheingabe auch eine entsprechende Taste am Lenkrad betätigen. Weiterhin kann der Fahrer auch manuell jede andere Start-Position in das Navigationssystem 4 eingeben.

Der Fahrer gibt mittels Sprache den Befehl "Navigiere nach Genf in der Schweiz" ein. Dabei wird dem Fahrer auf der Anzeigefläche 6 während der Spracheingabe ständig angezeigt, welche Begriffe verstanden wurden. Der verstandene Sprachbefehl wird dann auf der Anzeigefläche 6 angezeigt, wie es in Figur 4 gezeigt ist.

Durch diese Anzeige wird der Fahrer bei der Spracheingabe unterstützt. Der Fahrer kann den verstandenen Befehl durch Sprache bestätigen oder den verstanden Befehl dadurch auswählen, dass er die Anzeigefläche 6 an der Stelle, an welcher die Spracheingabe angezeigt wird, berührt.

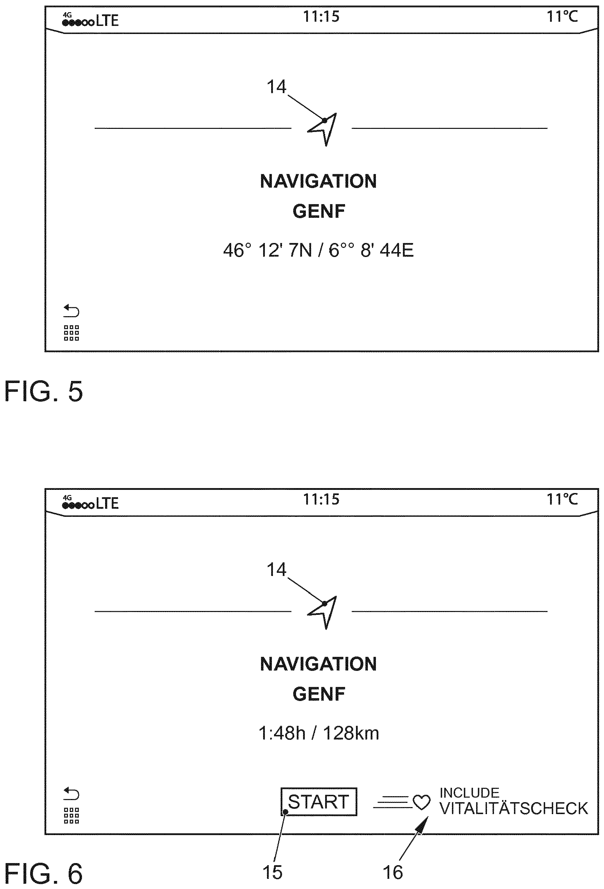

Die geographischen Koordinaten des Zielorts werden ermittelt und auf der Anzeigefläche 6, wie in Figur 5 gezeigt, angezeigt. Zudem wird mittels des graphischen Objekts 14 die Himmelsrichtung, in welcher der Zielort liegt, ständig angezeigt. Das graphische Objekt 14 stellt daher einen graphischen Kompass dar, der immer in Richtung der Ziel-Position zeigt.

Bisher wurden also die Start-Position des Fahrzeugs 8 und die gewünschte Ziel-Position ermittelt.

Dem Fahrer wird nun die Möglichkeit gegeben, die Navigation zu starten, wie es in Figur 6 gezeigt ist. Es wird dabei zunächst eine Dauer der Fahrt sowie eine Entfernung der StartPosition zur Ziel-Position angezeigt. Diese werden auf herkömmliche Art und Weise ohne die Berücksichtigung von Fahrerzustandsparametern ermittelt. Ist beispielsweise die Option "kurz" oder "schnell" eingestellt, beziehen sich die Angaben auf die kurze bzw. schnelle Fahrtroute.

Auf der Anzeigefläche 6 befinden sich die Schaltflächen 15 und 16. Durch Berühren der Anzeigefläche 6 an der Stelle der Schaltfläche 15 wird die Fahrtroutenberechnung mit der Einstellung "kurz" bzw. "schnell" begonnen.

Durch Berühren der Anzeigefläche 6 an der Stelle der Schaltfläche 16 werden Fahrerzustandsparameter in die Fahrtroutenberechnung mit einbezogen.

Die Auswahl, welche Fahrerzustandsparameter bei der Fahrtroutenberechnung berücksichtigt werden, wird dabei bereits über den Startbildschirm getroffen.

Wählt der Fahrer die Schaltfläche 9.1 (siehe Figur 1) aus, wird ein Menü geöffnet, mittels welchem der Fahrer auswählen kann, welche Fahrerzustandsparameter bei der Fahrtroutenberechnung berücksichtigt werden sollen, wenn er auf der Anzeige der Figur 6 die Schaltfläche 16 betätigt. Zudem kann der Fahrer in dem Menü auswählen, von welcher Erfassungseinheit 5.1 bis 5.4 die Fahrerzustandsparameter erfasst werden sollen. Im vorliegenden Beispiel wählt der Fahrer aus, dass die Fahrerzustandsparameter verwendet werden sollen, welche die Erfassungseinheit 5.4 über den Tag verteilt erfasst hat. Alle anderen Erfassungseinheiten 5.1 bis 5.3 werden dann nicht verwendet.

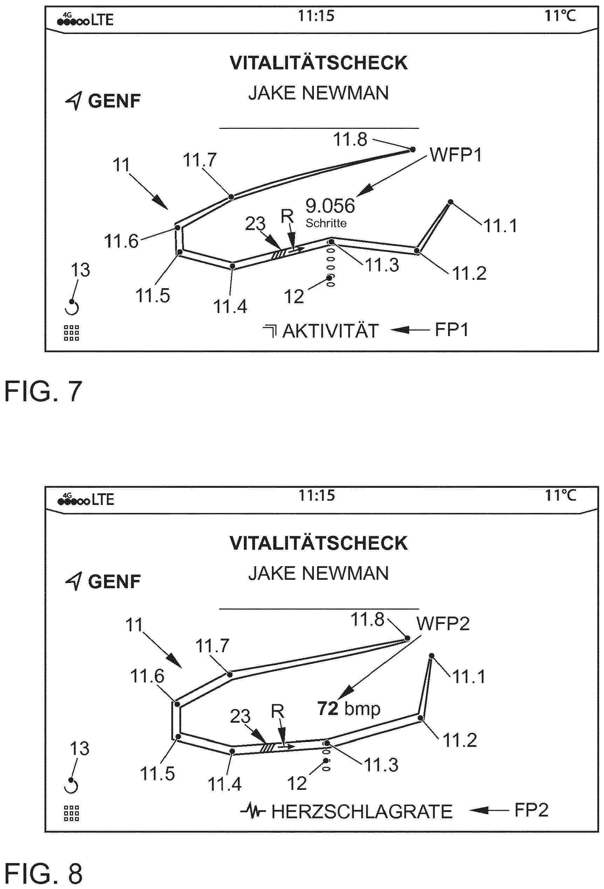

Mit Bezug zu den Figuren 7 bis 9 wird die Ermittlung von Fahrerzustandsparametern sowie deren Anzeige auf der Anzeigefläche 6 näher erläutert.

Im vorliegenden Beispiel hat der Fahrer ausgewählt, dass drei Fahrerzustandsparameter FP1, FP2 und FP3, nämlich Aktivität FP1, Herzschlagrate FP2 und Ruhezeit FP3 berücksichtigt werden sollen.

Die von dem Fitness-Armband 5.4 über den Erfassungszeitraum verteilt erfassten Werte der Fahrerzustandsparameter FP1 bis FP3 werden dann an die Steuervorrichtung 3 übertragen. Dort werden die Werte WFP1 bis WFP3 der Fahrerzustandsparameter FP1 bis FP3 ausgewertet und dadurch ein Wert WFP1 für die Aktivität FP1 ermittelt. Die Anzeige während der Ermittlung der Aktivität FP1 ist dabei mit Bezug zu Figur 7 schematisch dargestellt

Zu Beginn der Ermittlung des Werts WFP1 der Aktivität FP1 wird auf der Anzeigefläche 6 ein graphisches Objekt 11 erzeugt. Das graphische Objekt 11 ist dabei im Allgemeinen als zwei nebeneinander verlaufende Linien mit Ecken 11.1 bis 11.8 ausgestaltet. Dadurch erhält das graphische Objekt 11 eine besondere Form. Eine jeweilige Ecke 11. 1 bis 11.8 repräsentiert dabei einen über einen bestimmten Zeitraum gemittelten Wert WFP1 der Aktivität FP1 während des gesamten Erfassungszeitraumes. Hat das Fitness-Armband 24 Stunden gemessen, wird dieser 24 Stunden Zeitraum in acht drei Stunden Intervalle unterteilt, für welche jeweils ein gemittelter Wert berechnet wird. Daraus ergeben sich für die letzten 24 Stunden acht Werte, welche von den Ecken 11.1 bis 11.8 auf der Anzeigefläche 6 in dem graphischen Objekt 11 repräsentiert werden. Da das graphische Objekt 11 jedoch durch Linien dargestellt wird, lässt sich aus dem Verlauf des graphischen Objekts 11 kein realer Verlauf der Aktivität FP1 ableiten.

Vielmehr handelt es sich dabei um ein designtechnisch ansprechendes graphisches Objekt 11, welches zumindest indirekt eine Aussage über den Verlauf der Aktivität FP1 während des Erfassungszeitraums trifft. Für eine direkte Aussage über den Verlauf müsste das graphische Objekt 11 auseinandergeklappt werden. Es würde dann eine im Wesentlichen horizontale Linie mit Maxima und Minima darstellen.

Das graphische Objekt 11 wird zu keiner Zeit der Ermittlung der Aktivität FP1 vollständig angezeigt. Vielmehr wird das graphische Objekt 11 während der Dauer der Ermittlung derart erzeugt, dass zunächst die Ecke 11.8 angezeigt wird. Es wird dann das graphische Objekt 11 nach und nach auf der Anzeigefläche 6 gezeichnet. Dieser Effekt wird dadurch erzeugt, dass ein Intensitätsmaximum 23, beispielsweise in der Farbe blau, entgegen dem Uhrzeigersinn R entlang des graphischen Objekts 11 läuft. Bei einem vorhandenen gemittelten Wert ändert das Intensitätsmaximum 23 die Richtung. Dadurch wird der Verlauf des graphischen Objekts 11 geändert und eine Ecke 11.1 bis 11.8 gezeichnet. Hat das Intensitätsmaximum 23 die Ecke 11.3 erreicht, sind die Ecken 11.8 bis 11.5 sowie jeweils die Bereiche zwischen zwei Ecken 11.8 bis 11.5 bereits derart verblasst, dass der Verlauf des graphischen Objekts 11 in diesem Bereich nicht mehr sichtbar ist. Zudem nimmt der Abstand zwischen den beiden nebeneinander verlaufenden Linien ausgehend von der Ecke 11.8 bis zur Ecke 11.3 zu. Im weiteren Verlauf nimmt der Abstand zwischen den beiden Linien zu den Ecken 11.2 und 11.1 wieder ab. Dadurch wird zudem der visuelle Eindruck vermittelt, dass das graphische Objekt 11 entgegen dem Uhrzeigersinn R aus der Tiefe der Anzeigefläche 6 nach vorne läuft und dann wieder in die Tiefe der Anzeigefläche 6 zurück läuft.

Wird die Ecke 11.3 des graphischen Objekts 11 gezeichnet, wird diese dadurch hervorgehoben, dass die Intensität des Intensitätsmaximums 23 zunimmt und/oder die Farbe des Intensitätsmaximums 23 verändert wird. Zudem wird auf der Anzeigefläche 6 eine Markierung 12 angezeigt, welche sich zu der Ecke 11.1 hin erstreckt. Dadurch wird angezeigt, dass das graphische Objekt 11 an dieser Stelle wieder in die Tiefe der Anzeigefläche 6 zurückläuft. Zwar wird das graphische Objekt 11 im Allgemeinen durch zwei nebeneinander verlaufende Linien dargestellt. Diese werden jedoch zu keiner Zeit des Verfahrens vollständig dargestellt. Das graphische Objekt 11 ist kein statisches Objekt, welches beständig auf der Anzeigefläche 6 angezeigt wird. Vielmehr wird das graphische Objekt 11 während der Ermittlung des Werts WFP1 des Fahrerzustandsparameters Aktivität FP1 in einer Animation verändert.

Ist die Ermittlung des Werts WFP1 der Aktivität FP1 beendet, wird der ermittelte Wert WFP1 innerhalb der von den Linien gebildeten Gesamtform , welche das graphische Objekt 11 zeichnet, oberhalb der Ecke 11.3 angezeigt. Im vorliegenden Beispiel wurden für die Aktivität 9.056 Schritte ermittelt. Dies stellt die Anzahl der Schritte dar, die der Fahrer im Laufe des Erfassungszeitraums zurückgelegt hat.

Die Ecke 11.3 kann alternativ anstelle eines tatsächlich gemessenen Wertes auch den ermittelten Wert WFP1 von 9.056 Schritten für die Aktivität FP1 darstellen. Dadurch wird dieser Wert WFP1 auch durch das graphische Objekt 11 dargestellt. Zudem wird die Ecke 11.3 im Vordergrund und hervorgehoben dargestellt. Dadurch wird dem Fahrer verdeutlicht, dass es sich bei dem durch die Ecke 11.3 dargestellten Wert um den Wert WFP1 handelt, der letztendlich bei der Ermittlung der Fahrtroute berücksichtigt wird.

Dieser Wert WFP1 selbst hat für den Fahrer selbst jedoch wenig Aussagekraft. Der Wert WFP1 kann daher auch in die Kategorie "HOCH" eingestuft werden, welche dann alternativ zu der Anzahl der Schritte angezeigt wird.

Ist die Ermittlung des Werts WFP1 des Fahrerzustandsparameters Aktivität FP1 abgeschlossen und der ermittelte Wert WFP1 über die Einstufung in die Kategorie "HOCH" angezeigt worden, verblasst der Teil des noch sichtbaren graphischen Objekts 11, bis kein graphisches Objekt 11 mehr angezeigt wird. Auch die Anzeige "9.056 Schritte" bzw. "HOCH" verblasst.

Es wird als nächstes der Wert WFP2 für den Fahrerzustandsparameter Herzschlagrate FP2 ermittelt.

Die Ermittlung des Wertes WFP2 der Herzschlagrate FP2 erfolgt dabei äquivalent zur Ermittlung des Wertes WFP1 der Aktivität.

Dazu wird ein neues graphisches Objekt 11 auf der Anzeigefläche 6 auf die gleiche Weise wie für den Fahrerzustandsparameter Aktivität FP1 erzeugt. Die Anzeige während der Ermittlung der Herzschlagrate FP2 ist dabei mit Bezug zu Figur 8 schematisch dargestellt.

Der unterschiedliche Verlauf des graphischen Objekts 11 für die Herzschalgrate FP2 ist dabei im Vergleich zum graphischen Objekt 11 für die Aktivität FP1 durch den allgemein anderen Verlauf des Fahrerzustandsparameters Herzschlagrate FP2 während des Erfassungszeitraumes bedingt.

Das graphische Objekt 11 für die Herzschlagrate FP2 weist jedoch aufgrund des gleichen Erfassungszeitraumes von 24 Stunden ebenso acht Ecken 11.1 bis 11.8 auf.

Auch hier läuft wieder ein Intensitätsmaximum 23 entlang dem Verlauf des graphischen Objekts 11. Ist das Intensitätsmaximum 23 an der Ecke 11.3 angekommen, sind die Ecken 11.8 bis 11.5 sowie die Bereiche zwischen jeweils zwei benachbarten Ecken 11.8 bis 11.5 derart verblasst, dass der Verlauf des graphischen Objekts 11 in diesem Bereich nicht mehr sichtbar ist.

Für die Herzschlagrate FP2 wird der Wert WFP2 zu 72 Schläge pro Minute ermittelt. Dabei handelt es sich um einen über den gesamten Erfassungszeitraum gemittelten Wert WFP2.

Auch hier kann die Ecke 11.3 alternativ den tatsächlichen Wert 72 Schläge pro Minute darstellen.

Ist der Wert WFP2 für die Herzschlagrate FP2 ermittelt worden, wird noch der Fahrerzustandsparameter FP3, welcher die Ruhezeit des Fahrers während des Erfassungszeitraumes darstellt, ermittelt.

Auch hierfür wird wieder ein graphisches Objekt 11 wie mit Bezug zu den Fahrerzustandsparametern Aktivität FP1 und Herzschlagrate FP2 auf der Anzeigefläche 6 erzeugt.

Während der Ermittlung der Fahrerzustandsparameter FP1 bis FP3 wird zudem ein sogenannter Ladering 13 angezeigt. Der Ladering 13 zeigt an, dass der Ermittlungsvorgang für den kombinierten Wert KWFP noch nicht abgeschlossen ist. Solange die Fahrerzustandsparameter FP1 bis FP3 ermittelt werden, wird der Ladering 13 angezeigt und zeigt durch eine farbliche Veränderung mit der Zeit entlang seines Radius an, dass die Ermittlung läuft. Ist die Ermittlung der Fahrerzustandsparameter FP1 bis FP3 abgeschlossen, wird der Ladering 13 weiterhin solange auf der Anzeigefläche angezeigt, solange der kombinierte Wert KWFP ermittelt wird.

Die graphischen Objekte 11 und 13 werden in blauer Farbe dargestellt. Die Farbe des graphischen Objekts 11 dient als Indikator dafür, ob die ermittelten Werte WFP1 bis WFP3 für die Fahrerzustandsparameter im Normalbereich liegen oder nicht. Liegen die Fahrerzustandsparameter außerhalb des Normalbereichs für den im System angemeldeten Fahrer, werden diese beispielsweise rot dargestellt.

Aus den ermittelten Werte WFP1 bis WFP3 für die Fahrerzustandsparameter FP1 bis FP3 wird dann ein Wert KWFP für den Zustand des Fahrers ermittelt. Dadurch wird es ermöglicht, den Zustand des Fahrers insgesamt zu kategorisieren. Bei der Berechnung eines Wertes KWFP für den Zustand des Fahrers wird beispielsweise der Fahrerzustandsparameter Aktivität FP1 mehr gewichtet als der Fahrerzustandsparameter Herzschlagrate FP2. Der Fahrerzustandsparameter Aktivität FP1 ist in der Regel ein besserer Indikator für die tatsächliche Fahrtauglichkeit des Fahrers als die Herzschlagrate FP2. Die Herzschlagrate FP2 kann sich schließlich aufgrund körperlicher Belastung kurzfristig erhöhen. Auch bestimmte Fahrsituationen können zu einer kurzfristigen Erhöhung der Herzschlagrate führen.

Aus einer Historie von Werten KWFP, welche in der Vergangenheit bereits für den Fahrer ermittelt worden sind, wird ein Normalbereich für den Wert KWFP ermittelt. Fällt der aus den erfassten Fahrerzustandsparametern FP1 bis FP3 ermittelte Wert KWFP in diesen Normalbereich, wird der Wert KWFP in eine erste Kategorie eingeteilt.

Alternativ können die Ecken 11.8 bis 11.4, 11.2 und 11.1 auch Historienwerte darstellen. Zudem kann das graphische Element 11 jede beliebige Anzahl an Ecken, beispielsweise auch zwölf anstelle von acht Ecken aufweisen.

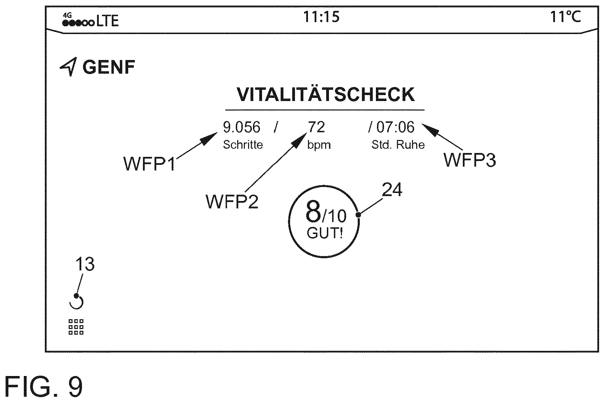

Figur 9 zeigt ein Beispiel für eine Anzeige, wie sie dem Fahrer angezeigt wird, wenn der Wert KWFP ermittelt worden ist. Dabei ist der Höchstwert, den der Wert KWFP erreichen kann "10". Im vorliegenden Beispiel wurde ein Wert KWFP von "8" ermittelt. Dies wird dem Fahrer in dem Anzeigefeld 25 angezeigt. Der Zustand des Fahrers wird daher in die Kategorie "gut" eingestuft. Der Wert KWFP liegt daher für den Fahrer innerhalb des Normalbereichs.

Dabei wird die Kategorisierung wie folgt vorgenommen: Liegt der ermittelte Wert KWFP in einem Bereich von 7 bis 10 wird die Verfassung des Fahrers als "gut" eingestuft. Liegt der ermittelte kombinierte Wert KWFP in einem Bereich von 4 bis ausschließlich 7, wird die Verfassung des Fahrers als "mittel" eingestuft. Liegt der ermittelte kombinierte Wert KWFP in einem Bereich von 0 bis ausschließlich 4, wird die Verfassung des Fahrers als "schlecht" eingestuft.

Ist der ermittelte Wert KWFP niedriger als der niedrigste Wert des Normalbereichs, kann beispielsweise der Wert WFP1 für die Aktivität FP1, der Wert WFP3 für die Ruhezeit FP3 und der Wert WFP2 für die Herzschlagrate FP2 niedrig sein. Dies kann dann der Fall sein, wenn der Fahrer müde ist. Es sollen ihm dann keine besonders sportlichen oder im Schwierigkeitsgrad erhöhten Fahrtrouten zugemutet werden. Der Zustand wird dann je nach Größe der Abweichung nach unten vom Normalbereich als "mittel" oder "schlecht"eingestuft.

Ist der ermittelte Wert KWFP höher als der höchste Wert des Normalbereichs, kann der Wert WFP1 für die Aktivität FP1 und der Wert WFP3 für die Herzschlagrate FP3 erhöht sein. Dies kann dann der Fall sein, wenn der Fahrer aufgeregt oder verärgert ist. Auch dann sollen dem Fahrer keine Fahrtrouten mit erhöhtem Schwierigkeitsgrad zugemutet werden, da diese eine besonders hohe Aufmerksamkeit erfordern. Die Verfassung wird dann ebenfalls je nach Größe der Abweichung vom Normalbereich als "mittel" oder "schlecht"eingestuft.

Zudem werden dem Fahrer die ermittelten einzelnen Werte WFP1 bis WFP3 der Fahrerzustandsparameter FP1 bis FP3 nochmals zusammengefasst angezeigt. Dadurch kann die Akzeptanz des Fahrers für die vorgenommene Kategorisierung erhöht werden.

Weiterhin wird dadurch, dass der Fahrer die Fahrerzustandsparameter FP1 bis FP3 bei der Fahrtroutenberechnung berücksichtigt werden, davon ausgegangen, dass die Einstellung "schnell" nicht beibehalten werden soll. Vielmehr wird dies im vorliegenden Fall als Indikator dafür angesehen, dass der Fahrer eine Panoramaroute fahren möchte.

Unter Berücksichtigung des Wertes KWFP werden drei Routen R1 bis R3 ermittelt, die für den Fahrer als Fahrtroute mit seiner ermittelten Verfassung in Frage kommen. Alle drei Routen R1 bis R3 sind dabei der Kategorie "sportlich" zugeordnet und weisen einen hohen Schwierigkeitsgrad auf. Bei den drei ermittelten Routen R1 bis R3 handelt es sich im vorliegenden Fall um drei Pass-Routen, bei denen Gebirgspässe befahren werden. Pass-Routen weisen dabei kurvige Straßenverläufe und Höhenprofile auf, die mehrere 100 bis 1000 Meter umfassen.

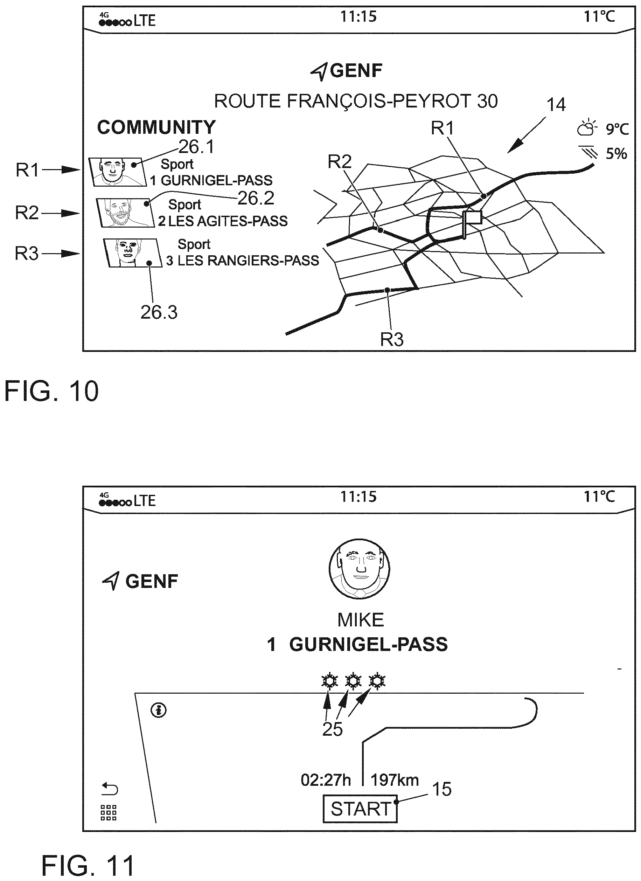

Die drei Fahrtrouten R1 bis R3 werden auf der Anzeigefläche 6 zur Auswahl angezeigt, wie in Figur 10 gezeigt ist. Dabei werden die Fahrtrouten R1 bis R3 absteigend nach einer Bewertung sortiert angezeigt. Die Bewertung ist dabei von anderen Fahrern, welche die Routen R1 bis R3 bereits gefahren sind, vergeben worden. Die Bewertung kann dabei über die Kommunikationseinrichtung 22, die mit einer außerhalb des Fahrzeugs 8 angeordneten Informationseinrichtung gekoppelt ist, abgerufen werden. Zudem werden die drei Routen R1 bis R3 in einer graphisch dargestellten Landkarte 14 auf der Anzeigefläche 6 dargestellt.

Wählt der Fahrer als Vorauswahl beispielsweise die Route R1 an, wird diese auf der Landkarte 14 hervorgehoben dargestellt, so dass der Fahrer einen Überblick über die Fahrtroute R1 erhält. Hierzu sind die graphischen Objekte 26.1 bis 26.3, welche Fotos der Fahrer wiedergeben, die die entsprechende Fahrtroute R1 bis R3 bewertet haben, als Schaltflächen ausgebildet. Durch einmaliges Berühren des graphischen Objekts 26.1 wird die Route R1 dann angewählt.

Wählt der Fahrer die Fahrtroute R1 tatsächlich aus, was beispielsweise durch ein nochmaliges Berühren des graphischen Objekt 26.1 erfolgt, wird die Dauer der Fahrtroute R1 sowie deren Länge auf der Anzeigefläche 6 dargestellt, wie in Figur 11 gezeigt ist. Zudem wird eine Einschätzung der Straßenbedingungen mittels der graphischen Symbole 25 gegeben.

Durch Berühren der Schaltfläche 15, kann der Fahrer die Navigation starten.

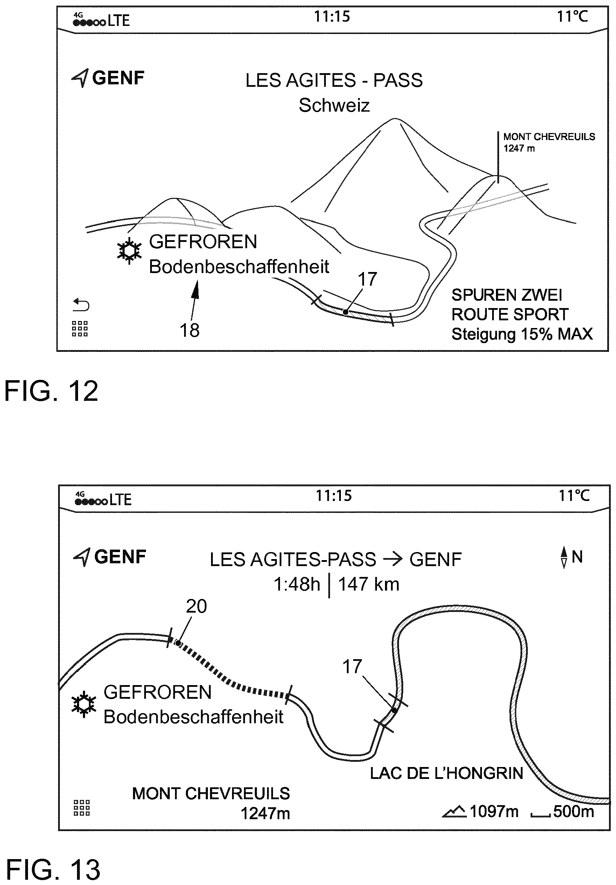

Mit Bezug zu den Figuren 12 bis 15 wird ein zweites Ausführungsbeispiel des erfindungsgemäßen Verfahrens erläutert.

Dabei wurden die drei Fahrtrouten R1 bis R3, wie vorstehend erläutert, ermittelt.

Der Fahrer wählt die Route R2 "Les Agites - Pass" aus.

Es werden dann über die Kommunikationseinrichtung 13 Informationen zu auf der Route R2 vorherrschenden Bedingungen eingeholt. Die Kommunikationseinrichtung kommuniziert dazu insbesondere mit einer außerhalb des Fahrzeugs 8 angeordneten Informationseinrichtung.

Die Informationen werden zu Wetterbedingungen und Straßenbedingungen auf der Fahrtroute R2 eingeholt.

Die Bedingungen werden dann auf der Anzeigefläche 6 angezeigt.

Wie in Figur 12 gezeigt, wird die Fahrtroute R2 in einer dreidimensionalen Darstellung auf der Anzeigefläche 6 angezeigt. Dabei wird das die Fahrtroute R2 umgebende Höhenprofil in der Anzeige in die dreidimensionale Darstellung von Bergen und Tälern umgesetzt. Ist der Name der Berge, welche die Fahrtroute R2 umgeben, bekannt, werden diese mit der Höhe der Berge angezeigt. Weiterhin wird ein Streckenabschnitt 17 auf der Fahrtroute R2 ermittelt, auf dem der Boden gefroren ist. Dieser Streckenabschnitt 17 wird auf der Anzeigefläche 6 hervorgehoben dargestellt. Zudem wird in dem Textfeld 18 die Bodenbeschaffenheit als "gefroren" angegeben.

Ein weiteres Anzeigebeispiel ist in Figur 13 gezeigt. Dabei wurde ermittelt, dass auf dem Streckenabschnitt 20 mit Steinschlag zu rechnen ist. Dies wird dem Fahrer dadurch dargestellt, dass der Streckenabschnitt 20 hervorgehoben dargestellt wird. Für den Streckenabschnitt 17 wird wieder angezeigt, dass dort mit gefrorenem Boden zu rechnen ist.

Es wird weiterhin ermittelt, ob das Fahrzeug 8 im momentanen Zustand dazu geeignet ist, die ausgewählte Fahrtroute R2 zu befahren. Dazu umfasst die Vorrichtung 1 zusätzlich technische Einrichtungen, die im Fahrzeug 8 zum Ermitteln von Daten bezüglich des Tankfüllstands, des Reifendrucks, der Art der aufgezogenen Reifen, des Zustands der Bremsen und/oder des Aktivierungszustands von Fahrerassistenzsystemen verbaut sind. Diese Daten werden an die Steuervorrichtung 3 übertragen, welche wiederum einen Hinweis auf der Anzeigefläche 6 erzeugt.

Es wird zunächst die Befüllung des Tanks ermittelt. Ist diese nicht ausreichend, um die Fahrtroute R2 zu bewältigen, wird der Fahrer vor Fahrtantritt darauf hingewiesen, dass der Tank des Fahrzeugs 8 noch aufgefüllt werden sollte.

Weiterhin werden die auf dem Fahrzeug 8 aufgezogenen Reifen darauf überprüft, ob sie zur Bewältigung der Fahrtroute R2 geeignet sind. Sind Sommerreifen aufgezogen, wird dem Fahrer davon abgeraten, die Fahrtroute R2, auf welcher teilweise winterliche Bedingungen mit gefrorenem Boden vorherrschen, zu befahren.

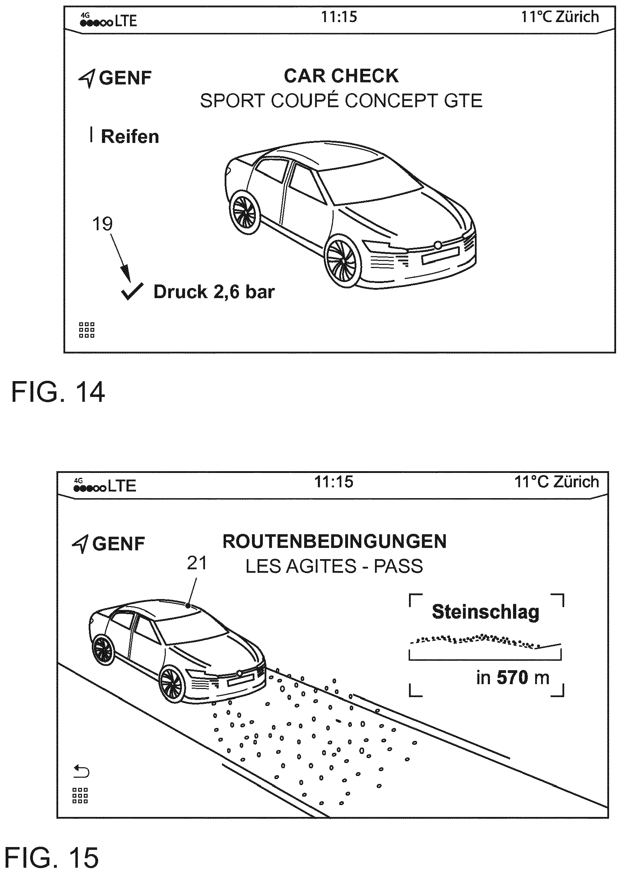

Zudem wird der Reifendruck überprüft und dem Fahrer in einer Anzeige, wie sie beispielsweise in Figur 14 gezeigt ist, angezeigt. Im vorliegenden Beispiel hat das Fahrzeug 8 Winterreifen aufgezogen. Zudem entspricht der Druck von 2,6 Bar dem für die aufgezogenen Reifen vorgeschriebenen Druck. Um dem Fahrer anzuzeigen, dass die Reifen dazu geeignet sind, die Fahrtroute R2 zu bewältigen, wird das graphische Symbol 19, welches als blauer Haken ausgestaltet ist, neben dem Reifendruck angezeigt. Zusätzlich können dem Fahrer noch allgemeine Informationen oder Hinweise zum Fahrzeugzustand angezeigt werden. Beispielsweise können dem Fahrer noch Informationen zu aktivierten Fahrerassistenzsystemen oder dem Zustand der Bremsen gegeben werden.

Mit Bezug zu Figur 15 ist eine Anzeige gezeigt, wie sie auf der Anzeigefläche 6 erzeugt werden kann, wenn der Fahrer die Fahrtroute R2 ausgewählt hat und dort fährt. Wird dann ermittelt, dass sich das Fahrzeug dem Streckenabschnitt 20 nähert, wird ein Fahrzeug 21 angezeigt. Zudem wird auf der Anzeige vor dem Fahrzeug eine graphische Darstellung von Steinschlag angezeigt. Weiterhin wird dem Fahrer die Entfernung zum Streckenabschnitt 20, im vorliegenden Beispiel 570 m, angezeigt. Dadurch kann der Fahrer während dem Fahren auf die vor ihm liegenden Bedingungen vorbereitet werden.

In einem weiteren Ausführungsbeispiel des erfindungsgemäßen Verfahrens werden die Fahrerzustandsparameter zu jeder Zeit während der Fahrt ermittelt. Wird dann ermittelt, dass sich die Werte außerhalb des Normalbereichs befinden, kann die Fahrtroute während der Fahrt umgerechnet werden und somit die neue Verfassung des Fahrers berücksichtigt werden.

Der Zustand des Fahrers kann im ersten Ausführungsbeispiel auch mittels der Erfassungseinheiten 5.1, 5.2 und/oder 5.3 erfasst werden. Dabei handelt es sich dann um den momentanen Zustand des Fahrers. Die Entwicklung des Fahrerzustands vor Fahrtantritt wird dann außer Acht gelassen. Alternativ können auch Daten von allen Erfassungseinheiten 5.1 bis 5.4 gleichzeitig berücksichtigt werden. So unterscheidet sich insbesondere die Aktivitätsmessung im Fahrzeug 8, die mittels der Erfassungseinheit 5.1 getätigt wird, von der Aktivitätsmessung, die mittels der Erfassungseinheit 5.4 außerhalb des Fahrzeugs 8 in dem vorbestimmten Erfassungszeitraum getätigt wird, erheblich. Insbesondere kann durch die Berücksichtigung der Daten von den Erfassungseinheiten 5.1 bis 5.3 eine Zustandsänderung des Fahrers während dem Fahren besser eingeschätzt und eine ausgewählte Fahrtroute R1, R2 oder R3 dann umgerechnet werden.

Das erfindungsgemäße Verfahren kann drei unterschiedliche Überprüfungsschritte umfassen. Der erste Überprüfungsschritt umfasst dabei die Überprüfung des Fahrers selbst. Der zweite Überprüfungsschritt umfasst die Überprüfung der ermittelten Fahrtrouten auf besondere Straßenbedingungen. Der dritte Überprüfungsschritt ist optional und umfasst die Überprüfung des Fahrzeugs ob diese dazu ausgestattet ist, die ermittelte Fahrtroute unter den Straßenbedingungen zu befahren.

### Bezugszeichenliste

- 1: Vorrichtung
- 2: Anzeigevorrichtung
- 3: Steuervorrichtung
- 4: Ermittlungseinheit; Navigationssystem
- 5.1: Erfassungseinheit; Kamera
- 5.2: Erfassungseinheit; Pulsmessgerät
- 5.3: Erfassungseinheit
- 5.4: Erfassungseinheit; Fitness-Armband
- 6: Anzeigefläche
- 7: berührungsempfindliche Oberfläche
- 8: Fahrzeug
- 9.1 - 9.3: graphische Objekte
- 10: graphisches Feld
- 11: graphisches Objekt
- 11.1 - 11.5: Bereiche des graphischen Objekts
- 12: graphisches Objekt
- 13: Ladering
- 14: graphische Landkarte
- 15, 16: Schaltflächen
- 17: Streckenabschnitt
- 18: Textfeld
- 19: graphisches Symbol
- 20: Streckenabschnitt
- 21: graphische Darstellung des Fahrzeugs
- 22: Kommunikationseinrichtung
- 23: Intensitätsmaximum
- 24: Anzeigefeld
- 25: graphische Symbole
- 26.1 - 26.3: graphische Objekte
- FP1 - FP3: Fahrerzustandsparameter
- WFP1 - WFP3: Werte der Fahrerzustandsparameter
- KWFP: Wert für Zustand des Fahrers

## Patentansprüche

1. Verfahren zur Ermittlung einer Fahrtroute (R1, R2, R3) für ein Fahrzeug (8), bei dem
eine Start-Position und eine Ziel-Position für das Fahrzeug (8) ermittelt werden,
zumindest ein Fahrerzustandsparameter (FP1, FP2, FP3) für einen Fahrer erfasst wird,
aus dem Fahrerzustandsparameter (FP1, FP2, FP3) ein Wert (KWFP) für einen Zustand des Fahrers ermittelt wird,
zumindest eine Fahrtroute (R1, R2, R3) von der Start-Position zu der Ziel-Position in Abhängigkeit von dem Wert (KWFP) für den Zustand des Fahrers ermittelt wird und
die ermittelte Fahrtroute (R1, R2, R3) angezeigt wird,
**dadurch gekennzeichnet, dass**
der Wert (KWFP) für den Zustand des Fahrers mit einem Soll-Wertebereich für den Zustand des Fahrers verglichen wird,
wenn der Wert (KWFP) für den Zustand des Fahrers innerhalb des Soll-Wertebereichs liegt, der Wert (KWFP) für den Zustand des Fahrers einer ersten Kategorie zugeordnet wird, und,
wenn der Wert (KWFP) für den Zustand des Fahrers außerhalb des Soll-Wertebereichs liegt, der Wert (KWFP) für den Zustand des Fahrers einer zweiten Kategorie zugeordnet wird,
wobei der Soll-Wertebereich für den Zustand des Fahrers aus einer Historie von Werten (KWFP) für den Zustand des Fahrers, die für den Fahrer in der Vergangenheit ermittelt wurden, ermittelt wird, und
wobei, wenn der Wert (KWFP) für den Zustand des Fahrers der ersten Kategorie zugeordnet wird, zumindest eine Fahrtroute ermittelt wird, die einen Schwierigkeitsgrad einer ersten Stufe aufweist, und,
wenn der Wert (KWFP) für den Zustand des Fahrers der zweiten Kategorie zugeordnet wird, zumindest eine Fahrtroute ermittelt wird, die einen Schwierigkeitsgrad einer zweiten Stufe aufweist,
wobei der Schwierigkeitsgrad der Fahrtroute der ersten Stufe höher ist als der Schwierigkeitsgrad der Fahrtroute der zweiten Stufe, wobei eine Fahrtroute mit erhöhtem Schwierigkeitsgrad eine besonders hohe Aufmerksamkeit erfordert.

2. Verfahren nach Anspruch 1,
**dadurch gekennzeichnet, dass**
der Fahrerzustandsparameter (FP1, FP2, FP3) den Aufmerksamkeitsgrad, die Aktivität (FP1), die Herzschlagrate (FP2), die Ruhezeit (FP3), den Herzrhythmus, den Blutdruck, die Sauerstoffsättigung, die Atemfrequenz und/oder die Lidschlagfrequenz des Fahrers umfasst.

3. Verfahren nach einem der vorhergehenden Ansprüche,
**dadurch gekennzeichnet, dass**
der Wert (KWFP) für den Zustand des Fahrers aus zumindest zwei einzelnen Fahrerzustandsparametern (FP1, FP2, FP3) ermittelt wird.

4. Verfahren nach einem der vorhergehenden Ansprüche,
**dadurch gekennzeichnet, dass**
Informationen zu auf der ermittelten Fahrtroute (R1, R2, R3) vorherrschenden Bedingungen ermittelt werden,
die Fahrtroute (R1, R2, R3) zumindest teilweise auf einer Anzeigefläche (6) angezeigt wird und
die Informationen graphisch in der Anzeige der Fahrtroute (R1, R2, R3) dargestellt werden.

5. Verfahren nach einem der vorhergehenden Ansprüche,
**dadurch gekennzeichnet, dass**
ermittelt wird, ob das Fahrzeug (8) dazu ausgestattet ist, die ermittelte Fahrtroute (R1, R2, R3) zu befahren, und,
in Abhängigkeit von dieser Ermittlung ein Hinweis auf der Anzeigefläche (6) angezeigt wird.

6. Vorrichtung (1) zur Ermittlung einer Fahrtroute (R1, R2, R3) für ein Fahrzeug (8), mit
zumindest einer Erfassungseinheit (5.1, 5.2, 5.3), mittels welcher ein Fahrerzustandsparameter (FP1, FP2, FP3) für einen Fahrer erfassbar ist,
einer Ermittlungseinheit (4), mittels welcher eine Start-Position und eine ZielPosition für das Fahrzeug (8) ermittelbar sind, und mittels welcher aus dem Fahrerzustandsparameter ein Wert (KWFP) für einen Zustand des Fahrers ermittelbar ist,
einer Anzeigevorrichtung (2) und
einer Steuervorrichtung (3), mittels welcher die Ermittlungseinheit (4) derart ansteuerbar ist, dass in Abhängigkeit von dem Wert (KWFP) für den Zustand des Fahrers eine Fahrtroute (R1, R2, R3) von der Start-Position zu der Ziel-Position ermittelbar ist und mittels welcher die Anzeigevorrichtung (2) derart ansteuerbar ist, dass die ermittelte Fahrtroute (R1, R2, R3) anzeigbar ist,
**dadurch gekennzeichnet, dass**
die Steuervorrichtung (3) dazu eingerichtet ist, den Wert (KWFP) für den Zustand des Fahrers mit einem Soll-Wertebereich für den Zustand des Fahrers zu vergleichen,
wenn der Wert (KWFP) für den Zustand des Fahrers innerhalb des Soll-Wertebereichs liegt, den Wert (KWFP) für den Zustand des Fahrers einer ersten Kategorie zuzuordnen, und,
wenn der Wert (KWFP) für den Zustand des Fahrers außerhalb des Soll-Wertebereichs liegt, den Wert (KWFP) für den Zustand des Fahrers einer zweiten Kategorie zuzuordnen,
wobei der Soll-Wertebereich für den Zustand des Fahrers aus einer Historie von Werten (KWFP) für den Zustand des Fahrers, die für den Fahrer in der Vergangenheit ermittelt wurden, ermittelt wird,
wobei, wenn der Wert (KWFP) für den Zustand des Fahrers der ersten Kategorie zugeordnet wird, zumindest eine Fahrtroute ermittelt wird, die einen Schwierigkeitsgrad einer ersten Stufe aufweist, und,
wenn der Wert (KWFP) für den Zustand des Fahrers der zweiten Kategorie zugeordnet wird, zumindest eine Fahrtroute ermittelt wird, die einen Schwierigkeitsgrad einer zweiten Stufe aufweist,
wobei der Schwierigkeitsgrad der Fahrtroute der ersten Stufe höher ist als der Schwierigkeitsgrad der Fahrtroute der zweiten Stufe, wobei eine Fahrtroute mit erhöhtem Schwierigkeitsgrad eine besonders hohe Aufmerksamkeit erfordert.

## Claims

1. Method for ascertaining a journey route (R1, R2, R3) for a vehicle (8), in which
a starting position and a destination position for the vehicle (8) are ascertained,
at least one driver state parameter (FP1, FP2, FP3) for a driver is captured,
a value (KWFP) for a state of the driver is ascertained from the driver state parameter (FP1, FP2, FP3),
at least one journey route (R1, R2, R3) from the starting position to the destination position is ascertained on the basis of the value (KWFP) for the state of the driver, and
the ascertained journey route (R1, R2, R3) is displayed,
**characterized in that**
the value (KWFP) for the state of the driver is compared with a desired value range for the state of the driver,
if the value (KWFP) for the state of the driver is within the desired value range, the value (KWFP) for the state of the driver is assigned to a first category, and,
if the value (KWFP) for the state of the driver is outside the desired value range, the value (KWFP) for the state of the driver is assigned to a second category,
wherein the desired value range for the state of the driver is ascertained from a history of values (KWFP) for the state of the driver that have been ascertained for the driver in the past, and
wherein, if the value (KWFP) for the state of the driver is assigned to the first category, at least one journey route that has a level of difficulty on a first level is ascertained, and,
if the value (KWFP) for the state of the driver is assigned to the second category, at least one journey route that has a level of difficulty on a second level is ascertained,
wherein the level of difficulty of the journey route on the first level is higher than the level of difficulty of the journey route on the second level, a journey route with an increased level of difficulty requiring a particularly high level of attentiveness.

2. Method according to Claim 1,
**characterized in that**
the driver state parameter (FP1, FP2, FP3) comprises the level of attentiveness, the activity (FP1), the heart rate (FP2), the rest period (FP3), the cardiac rhythm, the blood pressure, the oxygen saturation, the respiratory rate and/or the frequency of blinking of the driver.

3. Method according to either of the preceding claims,
**characterized in that**
the value (KWFP) for the state of the driver is ascertained from at least two individual driver state parameters (FP1, FP2, FP3).

4. Method according to one of the preceding claims,
**characterized in that**
information about prevailing conditions on the ascertained journey route (R1, R2, R3) is ascertained, at least part of the journey route (R1, R2, R3) is displayed on a display panel (6), and
the information is graphically presented in the display of the journey route (R1, R2, R3).

5. Method according to one of the preceding claims,
**characterized in that**
it is ascertained whether the vehicle (8) is equipped to take the ascertained journey route (R1, R2, R3), and this ascertainment is taken as a basis for displaying a suggestion on the display panel (6).

6. Apparatus (1) for ascertaining a journey route (R1, R2, R3) for a vehicle (8), having
at least one capture unit (5.1, 5.2, 5.3) that can be used to capture a driver state parameter (FP1, FP2, FP3) for a driver,
an ascertaining unit (4) that can be used to ascertain a starting position and a destination position for the vehicle (8), and that can be used to ascertain a value (KWFP) for a state of the driver from the driver state parameter,
a display apparatus (2) and
a control apparatus (3) that can be used to actuate the ascertaining unit (4) such that the value (KWFP) for the state of the driver can be taken as a basis for ascertaining a journey route (R1, R2, R3) from the starting position to the destination position and that can be used to actuate the display apparatus (2) such that the ascertained journey route (R1, R2, R3) can be displayed,
**characterized in that**
the control apparatus (3) is designed to compare the value (KWFP) for the state of the driver with a desired value range for the state of the driver,
if the value (KWFP) for the state of the driver is within the desired value range, to assign the value (KWFP) for the state of the driver to a first category, and,
if the value (KWFP) for the state of the driver is outside the desired value range, to assign the value (KWFP) for the state of the driver to a second category,
wherein the desired value range for the state of the driver is ascertained from a history of values (KWFP) for the state of the driver that have been ascertained for the driver in the past,
wherein, if the value (KWFP) for the state of the driver is assigned to the first category, at least one journey route that has a level of difficulty on a first level is ascertained, and,
if the value (KWFP) for the state of the driver is assigned to the second category, at least one journey route that has a level of difficulty on a second level is ascertained,
wherein the level of difficulty of the journey route on the first level is higher than the level of difficulty of the journey route on the second level, a journey route with an increased level of difficulty requiring a particularly high level of attentiveness.

## Revendications

1. Procédé permettant de déterminer un itinéraire (R1, R2, R3) pour un véhicule (8), dans lequel
une position de départ et une position d'arrivée sont déterminées pour le véhicule (8),
au moins un paramètre d'état de conducteur (FP1, FP2, FP3) est détecté pour un conducteur,
à partir du paramètre d'état de conducteur (FP1, FP2, FP3), une valeur (KWFP) est déterminée pour un état du conducteur,
au moins un itinéraire (R1, R2, R3) de la position de départ à la position d'arrivée est déterminé en fonction de la valeur (KWFP) pour l'état du conducteur, et
l'itinéraire déterminé (R1, R2, R3) est affiché,
**caractérisé en ce que**
la valeur (KWFP) pour l'état du conducteur est comparée à une plage de valeurs théoriques pour l'état du conducteur,
si la valeur (KWFP) pour l'état du conducteur se trouve à l'intérieur de la plage de valeurs théoriques, la valeur (KWFP) pour l'état du conducteur est attribuée à une première catégorie, et
si la valeur (KWFP) pour l'état du conducteur se trouve en dehors de la plage de valeurs théoriques, la valeur (KWFP) pour l'état du conducteur est attribuée à une deuxième catégorie,
la plage de valeurs théoriques pour l'état du conducteur étant déterminée à partir d'un historique de valeurs (KWFP) pour l'état du conducteur qui ont été déterminées pour le conducteur dans le passé, et
dans lequel, si la valeur (KWFP) pour l'état du conducteur est attribuée à la première catégorie, au moins un itinéraire est déterminé qui présente un degré de difficulté d'un premier niveau, et
si la valeur (KWFP) pour l'état du conducteur est attribuée à la deuxième catégorie, au moins un itinéraire est déterminé qui présente un degré de difficulté d'un deuxième niveau,
le degré de difficulté de l'itinéraire du premier niveau étant supérieur au degré de difficulté de l'itinéraire du deuxième niveau, un itinéraire ayant un degré de difficulté accru nécessitant une attention particulièrement élevée.

2. Procédé selon la revendication 1, **caractérisé en ce que** le paramètre d'état de conducteur (FP1, FP2, FP3) comprend le degré d'attention, l'activité (FP1), la fréquence cardiaque (FP2), le temps de repos (FP3), le rythme cardiaque, la pression sanguine, la saturation en oxygène, la fréquence respiratoire et/ou la fréquence de clignement du conducteur.

3. Procédé selon l'une quelconque des revendications précédentes, **caractérisé en ce que** la valeur (KWFP) pour l'état du conducteur est déterminée à partir d'au moins deux paramètres d'état de conducteur (FP1, FP2, FP3) individuels.

4. Procédé selon l'une quelconque des revendications précédentes, **caractérisé en ce que**
des informations sur des conditions régnant sur l'itinéraire déterminé (R1, R2, R3) sont déterminées,
l'itinéraire (R1, R2, R3) est affiché au moins partiellement sur une surface d'affichage (6), et
les informations sont représentées sous forme graphique sur l'affichage de l'itinéraire (R1, R2, R3).

5. Procédé selon l'une quelconque des revendications précédentes, **caractérisé en ce qu'**il est déterminé si le véhicule (8) est équipé pour parcourir l'itinéraire déterminé (R1, R2, R3), et en fonction de cette détermination, une indication est affichée sur la surface d'affichage (6).

6. Dispositif (1) de détermination d'un itinéraire (R1, R2, R3) pour un véhicule (8), comprenant
au moins une unité de détection (5.1, 5.2, 5.3) qui permet de détecter un paramètre d'état de conducteur (FP1, FP2, FP3) pour un conducteur,
une unité de détermination (4) qui permet de déterminer une position de départ et une position d'arrivée pour le véhicule (8), et qui permet de déterminer à partir du paramètre d'état de conducteur une valeur (KWFP) pour un état du conducteur,
un dispositif d'affichage (2), et
un dispositif de commande (3) qui permet de piloter l'unité de détermination (4) de telle sorte qu'en fonction de la valeur (KWFP) pour l'état du conducteur, un itinéraire (R1, R2, R3) de la position de départ à la position d'arrivée peut être déterminé, et qui permet de piloter le dispositif d'affichage (2) de telle sorte que l'itinéraire déterminé (R1, R2, R3) peut être affiché,
**caractérisé en ce que**
le dispositif de commande (3) est aménagé pour comparer la valeur (KWFP) pour l'état du conducteur à une plage de valeurs théoriques pour l'état du conducteur,
si la valeur (KWFP) pour l'état du conducteur se trouve à l'intérieur de la plage de valeurs théoriques, pour attribuer la valeur (KWFP) pour l'état du conducteur à une première catégorie, et
si la valeur (KWFP) pour l'état du conducteur se trouve en dehors de la plage de valeurs théoriques, pour attribuer la valeur (KWFP) pour l'état du conducteur à une deuxième catégorie,
la plage de valeurs théoriques pour l'état du conducteur étant déterminée à partir d'un historique de valeurs (KWFP) pour l'état du conducteur qui ont été déterminées pour le conducteur dans le passé,
dans lequel, si la valeur (KWFP) pour l'état du conducteur est attribuée à la première catégorie, au moins un itinéraire est déterminé qui présente un degré de difficulté d'un premier niveau, et
si la valeur (KWFP) pour l'état du conducteur est attribuée à la deuxième catégorie, au moins un itinéraire est déterminé qui présente un degré de difficulté d'un deuxième niveau,
le degré de difficulté de l'itinéraire du premier niveau étant supérieur au degré de difficulté de l'itinéraire du deuxième niveau, un itinéraire ayant un degré de difficulté accru nécessitant une attention particulièrement élevée.
